# EUROPÄISCHE PATENTANMELDUNG

(11) **EP 1 457 270 A1**
(43) Veröffentlichungstag der Anmeldung: **15.09.2004**
(21) Anmeldenummer: 03005592.5
(22) Anmeldetag: 12.03.2003
(51) Int. Cl.: B09B 3/00, B03B 9/06

(54) **Verfahren zum Verwerten von grober Schredder-Leichtfraktion in einem Schmelzzyklon**

(71) Anmelder: Voest-Alpine Industrieanlagenbau GmbH & Co., 4031 Linz (AT)
(72) Erfinder: Sauert, Fried, Dipl.-Ing., 4020 Linz (AT)
(74) Vertreter: VA TECH Patente GmbH & Co

(57) **Zusammenfassung**

Die Erfindung betrifft ein Verfahren zur thermischen Verwertung von Schredder-Leichtfraktion mit einem Korngrößenanteil > 2 mm von zumindest 50 %, wobei die Schredder-Leichtfraktion mit einem sauerstoffhältigen Gas, welches gegenüber Luft unter Normalbedingungen in seiner chemischen Reaktivität erhöht ist, in einem Schmelzzyklon zur Zündung gebracht und geschmolzen wird.

## Beschreibung

Die Entsorgung von Schredder-Leichtfraktion stellt seit geraumer Zeit ein Umweltproblem dar, weil das Deponieren von Schredder-Leichtfraktion zu einer Gefährdung des Grundwassers auf Grund der enthaltenen Schwermetallverbindungen führt. Dies gilt sowohl für Schredder-Leichtfraktion aus Altautos als auch aus Altprodukten andere Industriezweige wie z.B. der Elektro- oder Elektronikindustrie. Die Verbrennung von Schredder-Leichtfraktion wurde daher bereits vor einigen Jahren geprüft. In einigen Ländern wird Schredder-Leichtfraktion als Zwischenlösung zusammen mit üblichem Müll aus Haushalt und Gewerbe in bestehenden Müllverbrennungsanlagen mitverbrannt. Eine derartige thermische Behandlung von Schredder-Leichtfraktion ist nach Inkrafttreten der Altautoverordnung der EU, die hohe Verwertungsraten fordert, nicht mehr zulässig. Um der EU-Verordnung gerecht zu werden, wurden diverse Verfahren zur Behandlung von Schredder-Leichtfraktion entwickelt.

In der WO 99/15277 wird ein Verfahren beschrieben, in dem aus Auto-Schredder-Leichtfraktion während oder nach der Zerkleinerung noch enthaltene metallische Bestandteile aussortiert werden, die übrigen Stoffe einer Feinzerkleinerung auf unter 2 mm, vorzugsweise kleiner 1,25 mm, unterzogen werden und dann in einem Schmelzreaktor, vorzugsweise einem Schmelzzyklon, durch ihre inhärente Energie geschmolzen und durch Abkühlung zu einem ungefährlichen Feststoff umgewandelt werden. In einer besonders bevorzugten Form wird die in der Schredder-Leichtfraktion enthaltene Energie dazu benutzt, toxische Abfallstäube, insbesondere Filterstäube aus Müllverbrennungsanlagen und ggf. Stahlfilterstäube zusammen mit der Schredder-Leichtfraktion zu verarbeiten und unschädlich zu machen.

Ein Schmelzzyklon ist ein Hochleistungsschmelzaggregat mit Reaktions- bzw. Verweilzeiten kleiner als eine Sekunde. Brennstoffteilchen zünden um so schneller, je kleiner sie sind. Bei Schredder-Leichtfraktion-Teilchen, die nicht ausschließlich aus Brennstoff, sondern auch aus inerten Stoffen wie SiO₂, Al₂O₃, CaO o.ä. bestehen, gilt das in noch größerem Maße. Soll in dieser kurzen Zeit auch noch die inhärente Energie aus den Schredder-Leichtfraktion-Teilchen auf andere inerte Stoffteilchen, wie z.B. Filterstäube aus Müllverbrennungsanlagen, übertragen werden, so müssen beide Teilchen extrem klein sein. Filterstäube sind in der Regel kleiner als 1 mm, jedoch nicht die Partikel der Schredder-Leichtfraktion.

Aus diesem Grund wird in der WO 99/15277 eine Feinzerkleinerung der Schredder-Leichtfraktion auf unter 2 mm, vorzugsweise kleiner 1,25 mm, beschrieben. Die lässt sich aber nur in einer Spezialmühle erreichen, wie beispielsweise dem dort erwähnten Prallreaktor. Dabei sind je nach Durchsatz und Anfangskörnung mehrere dieser Spezialmühlen (parallel oder hintereinander geschaltet) notwendig. Je feiner dabei die Produktteilchen sind, desto größer sind die Verschleißerscheinungen an den Mahlkörpern. Damit verursacht die beschriebene Feinzerkleinerung nicht nur hohe Investitions- sondern auch hohe Betriebskosten.

Aufgabe der gegenständlichen Erfindung ist es daher, ein Verfahren bereitzustellen, bei welchem Schredder-Leichtfraktion mit erheblichem Anteil oder sogar vollständig oberhalb von 2 mm Korngröße thermisch verwertet werden kann. Ein solches Verfahren gestattet es, Zerkleinerungsaggregate mit geringerem Verschleiß zu betreiben, bzw. gegebenenfalls sogar ganz auf eine Zerkleinerung zu verzichten.

Die Lösung dieser Aufgabe gelingt bei einem Verfahren zur thermischen Verwertung von Schredder-Leichtfraktion mit einem Korngrößenanteil > 2 mm von zumindest 50 %, dadurch, dass Schredder-Leichtfraktion mit einem sauerstoffhältigen Gas, welches gegenüber Luft unter Standardbedingungen in seiner chemischen Reaktivität erhöht ist, in einem Schmelzzyklon zur Zündung gebracht und geschmolzen wird.

Unter "Luft unter Standardbedingungen" wird hier gewöhnliche Umgebungsluft mit einem Sauerstoffanteil von ca. 20,9 % (Rest größtenteils Stickstoff) und einer Temperatur von 25 °C verstanden. Zwar ist die chemische Reaktivität von Luft nicht absolut quantifizierbar, für die hier verfolgten Zwecke ist es aber ausreichend, dass der Fachmann weiß, dass die chemische Reaktivität eines sauerstoffhältigen Gases immer von seiner Temperatur abhängt, also beispielsweise durch Temperaturerhöhung gesteigert werden kann. Weiters ist die chemische Reaktivität eines sauerstoffhältigen Gases von der Sauerstoffkonzentration abhängig. Die chemische Reaktivität eines sauerstoffhältigen Gases kann daher durch eine Anreicherung mit Sauerstoff ebenfalls gesteigert werden. Desgleichen ist dies durch eine Kombination der beiden Maßnahmen möglich.

Damit ein Brennstoffteilchen bzw. -molekül zündet, muss es mit einem Sauerstoffmolekül zusammenstoßen und es muss dabei die für das Zustandekommen der Reaktion zwischen den beiden Molekülen erforderliche Aktivierungsenergie aufgebracht bzw. überschritten werden. Luft besteht zu ca. 20,9 % aus Sauerstoff, d.h., die Wahrscheinlichkeit, dass ein Brennstoffmolekül mit einem Sauerstoffmolekül zusammenstößt, beträgt 20,9 : 79,1. Diese Wahrscheinlichkeit und damit in der Praxis auch die Zündgeschwindigkeit des Schredder-Leichtfraktionsteilchens lässt sich durch die Erhöhung der Sauerstoffkonzentration in der Luft bis hin zur Verwendung von reinem Sauerstoff erhöhen.

Ob die für eine Umsetzung von Brennstoff- und Sauerstoffmolekül erforderliche Aktivierungsenergie erreicht wird, hängt von den Temperaturen der Reaktionspartner ab und kann daher durch die Wahl der Temperatur des sauerstoffhältigen Gases gezielt gesteuert werden.

Gemäß vorteilhaften Ausführungsvarianten des erfindungsgemäßen Verfahrens werden daher als in seiner chemischen Reaktivität erhöhtes sauerstoffhältiges Gas vorgewärmte Luft oder sauerstoffangereicherte Luft oder technischer Sauerstoff verwendet, wobei die sauerstoffangereicherte Luft und der technische Sauerstoff ebenfalls vorgewärmt sein können, um die reaktionsbeschleunigende Wirkung beider Maßnahmen auszunutzen.

Sowohl durch jede der beiden Maßnahmen Vorwärmung und Sauerstoffanreicherung allein, verstärkt aber durch deren Kombination, gelingt es, bei der Verbrennung bzw. Vergasung von Schredder-Leichtfraktion auch bei gröberen Teilchen als 2 mm für einen Schmelzzyklon ausreichend kurze Reaktionszeiten, bzw. ausreichend große Verbrennungs- bzw. Vergasungsgeschwindigkeiten zu erreichen. Je größer der Grobanteil und/oder je gröber das gröbste Korn ist, desto höher müssen Sauerstoffanreicherung und/oder Vorwärmung sein, wie auch aus den Tabellen 1-3 hervorgeht.

Im Fall der Vorwärmung wird das sauerstoffhältige Gas auf bis zu 800 °C, vorzugsweise auf bis zu 650 °C vorgewärmt.

Damit in einem Schmelzzyklon die Reaktionen mit ausreichend hoher Geschwindigkeit ablaufen, ist der Aufbau einer zyklonspezifischen Strömung erforderlich. Hierfür ist das sauerstoffhältige Gas zuständig, welches gemäß einer weiteren vorteilhaften Ausführungsform gleichzeitig als Trägergas zum Einblasen der Schredder-Leichtfraktion in den Schmelzzyklon verwendet wird.

Bei zunehmenden Temperaturen des sauerstoffhältigen Gases nimmt aber die Dichte und damit die Strahlkraft, d.h. der Impuls, des Gases ab. Um dennoch auf die entsprechende Strahlkraft zu kommen, muss das Gas mit einer entsprechend hohen Geschwindigkeit eingeblasen werden. Diese hängt vom Durchmesser des Schmelzzyklons und dem Feststoff-Massendurchsatz ab. Bei der industriellen Einschmelzung von Schredder-Leichtfraktion mit oder ohne zusätzlichen inerten Feststoffen liegt die Einblasgeschwindigkeit des sauerstoffhältigen Gases zwischen 20 und 200 m/s.

### Beschreibung von Vorrichtung und Verfahrensdetails

Ein Schmelzzyklon wie er für das erfindungsgemäße Verfahren verwendet wird, hat bevorzugterweise eine zylindrische, gegebenenfalls auch eine konische Form. und ist im Wesentlichen vertikal angeordnet.

Sauerstoffhältiges Gas und Shredder-Leichtfraktion werden dabei über mehrere - über den Umfang des Schmelzzyklons verteilte - Einblasstellen in den Schmelzzyklon eingeblasen.

Um eine optimale Ausnutzung des Zyklonvolumens zu erzielen, sowie um die für den Zyklon erforderliche Strömung zu erreichen, sind die über den Umfang des Zyklons verteilt angeordneten Einblasstellen in mindestens zwei horizontalen Ebenen angeordnet. Dabei sind vorteilhafterweise jeweils zwei Einblasstellen in einer Ebene, sowie um ca. 180° gegeneinander versetzt angeordnet.

Falls insgesamt lediglich zwei Einblasstellen vorgesehen sind, so ist es ebenfalls von Vorteil wenn diese um ca. 180° gegeneinander versetzt angeordnet sind, gegebenenfalls können die Einblasstellen außerdem in einer horizontalen Ebene angeordnet sein.

Zur Beschleunigung des Zündvorganges wird gemäß einer bevorzugten Ausführungsform das in den Schmelzzyklon eingeblasene Gemisch aus sauerstoffhältigem Gas und Shredder-Leichtfraktion durch mindestens einen Zündbrenner gezündet.

Nach einer grundlegenden Ausführungsform ist dabei ein einzige Zündbrenner am Schmelzzyklon angebracht. Das ist beispielsweise bei Verwendung eines hoch vorgewärmten, sauerstoffangereicherten Gases ausreichend.

Bevorzugterweise ist aber jeder Einblasstelle ein separater Zündbrenner zugeordnet.

Besonders bevorzugt ist, dass der Zündbrenner ringförmig um die Einblasestelle von Schredder-Leichtfraktion und/oder sauerstoffhältigem Gas angebracht ist.

Wie bereits erwähnt, ist es in der Praxis besonders vorteilhaft, wenn die inhärente Energie der Schredder-Leichtfraktion dazu genutzt wird, andere heizwertarme oder heizwertlose Stoffe einzuschmelzen, insbesondere dann, wenn es sich gleichzeitig um toxische Abfälle handelt. Dies ist auch mit gröberer Schredder-Leichtfraktion möglich. Allerdings muss dabei im Vergleich zur reinen Verbrennung bzw. Vergasung von reiner Schredder-Leichtfraktion mit steigendem inerten Anteil auch die Sauerstoffanreicherung angehoben werden, um die für die Wärmeübertragung benötigte Zeit durch schnellere Zündung zu kompensieren. Dies wird in Tabelle 3 dargestellt.

Zusätzlich zur Schredder-Leichtfraktion können in den Schmelzzyklon also auch weitere Stoffe, insbesondere Schlackenbildner, weitere zu entsorgende Abfallstoffe, Klärschlämme, oder Stäube, beispielsweise Stäube aus Müllverbrennungsanlagen und/oder aus Industrieprozessen eingeblasen werden.

Bei der Verbrennung bzw. Vergasung von Schredder-Leichtfraktion mit sauerstoffhältigem Gas treten unabhängig davon, ob gleichzeitig andere, gegebenenfalls inerte, Stoffe mit eingeschmolzen werden, innerhalb des Schmelzzyklons Temperaturen zwischen 1350 und 2400 °C auf. Bei solchen Innenraumtemperaturen wird die Zyklonwandung vorteilhafterweise ganz oder teilweise durch eine Wasserkühlung geschützt, wobei die wassergekühlten Teile der Wand entweder als Doppelmantel oder in Rohrkonstruktion ausgeführt sind. Laut oben erwähnter EU-Altautoverordnung wird eine maximale Verwertungsrate angestrebt. Daher ist es sinnvoll, auch die in das Kühlwasser übertragene Energie aus der Schredder-Leichtfraktion zu nutzen. Statt Kühlwasser kann auch jedes andere geeignete Kühlmedium verwendet werden.

Gemäß einer besonderen Ausführungsform der Erfindung wird deshalb die Kühlung des Schmelzzyklons als Verdampfungskühlung durchgeführt, wodurch diese Energie in Form von Dampf zurückgewonnen wird, der entweder als Prozessdampf in anderen Prozessen, zu Heizzwecken oder zur Verstromung genutzt werden kann.

Der bevorzugterweise verwendete Schmelzzyklon weist lediglich eine einzige, im Boden des Schmelzzyklons vorgesehene, gemeinsame Austrittsöffnung für Schmelze und Abgas auf.

Bevorzugterweise ist dem Schmelzzyklon ein Trennaggregat nachgeordnet, worin aus dem Schmelzzyklon austretende Schmelze und Abgas voneinander getrennt werden.

Als Trennaggregat wird bevorzugterweise die nachstehend beschriebene Apparatur verwendet.

Diese Trennaggregat ist bevorzugterweise als liegender Zyklon mit einem tangentialen oder sekantialen Eintritt für Schmelze und Abgas ausgeführt. Die Form des Trennaggregates ist im Wesentlichen zylindrisch, wobei am tiefsten Punkt der Mantelfläche des Trennaggregates der Schlackeaustritt angeordnet ist. Bevorzugterweise ist der Schlackeaustritt dabei tangential oder sekantial zum Umfang des Trennaggregates angeordnet und zwar in Längsrichtung in Bezug auf den Schmelzeeintritt versetzt angeordnet. Alternativ dazu kann der Schmelzeaustritt auch auf einer der Stirnseiten des zylindrischen Trennaggregates angeordnet sein. Der Gasaustritt für das Trennaggregat ist aber in jedem Fall auf einer dessen Stirnseiten angeordnet. In einer besonderen Ausführungsform kann das Trennaggregat in Längsrichtung zum Schlackenaustritt hin geneigt angeordnet sein.

Ebenso wie der Schmelzzyklon, ist auch das Trennaggregat aufgrund der darin herrschenden Temperaturen ganz oder teilweise mit einer Kühlung, vorzugsweise einer Wasserkühlung ausgestattet, wobei die wassergekühlten Teile als Doppelmantel oder in Rohrkonstruktion ausgeführt sind. Die Wasserkühlung ist bevorzugterweise als Verdampfungskühlung ausgeführt.

Gemeinsam mit einer gegebenenfalls im Zuge der Kühlung des Schmelzzyklons in Form von Dampf zurückgewonnenen Energie kann der bei der Verdampfungskühlung des Trennaggregates entstandene Dampf entweder als Prozessdampf in anderen Prozessen, zu Heizzwecken oder zur Verstromung genutzt werden.

Im Sinne einer möglichst vollständigen Verwertung wird vorzugsweise auch das während des Verfahrens entstandene Abgas unter Wärmerückgewinnung abgekühlt. Die Wärme des Abgases wird dabei an ein Wärmeträgermedium übertragen, beispielsweise überhitzten Dampf, Luft oder Stickstoff.

Besonders bevorzugt ist es, die aus dem Abgas rückgewonnene Wärme zur Vorwärmung von sauerstoffhältigem Gas zu verwenden, welches vorgewärmte Gas dann zur thermischen Verwertung der Shredder-Leichtfraktion eingesetzt wird.

Die Wärme des Abgases wird dabei direkt oder indirekt, bevorzugterweise direkt, auf das sauerstoffhältige Gas übertragen.

Die mittels des erfindungsgemäßen Verfahrens erzeugte Schmelze kann durch - bereits in den Schmelzzyklon erfolgende - gezielte Zugabe von bestimmten, beispielsweise inerten, Substanzen in ihren Eigenschaften kontrolliert beeinflusst werden, beispielsweise um die Auslaugbarkeit der nach dem Schmelzen verfestigten Schlacke oder deren Weiterverwendung in anderen Prozessen, zum Beispiel bei der Zementherstellung, zu verbessern.

Vorteilhafterweise wird die flüssige Schlacke zur Verfestigung einer Nass- oder Trockengranulation unterworfen, um die so produzierten feinen Schlacketeilchen zum Beispiel zu Strahlzwecken nutzen zu können.

Es ist gleichermaßen möglich, die flüssige Schlacke in Tiegel oder Kübel zu leiten, worin sie entweder langsam oder - mittels Fremdkühlung - schnell kristallin und/oder glasartig erstarrt, um sie grobstückig zum Beispiel im Straßen- oder Wasserbau nutzen zu können.

Nach einer Variante wird die erstarrte Schlacke vor ihrer Weiterverwendung gemahlen.

Das beim erfindungsgemäßen Verfahren entstehende Abgas ist üblicherweise noch staubhältig. Dieser Staub kann noch beträchtliche Mengen an wirtschaftlich sinnvoll wiederverwertbaren Stoffen, beispielsweise Metalle, enthalten.

Bevorzugterweise wird daher der in dem Abgas enthaltene Staub vom Abgas getrennt und darin enthaltene Wertmetalle in getrennten Prozessen rückgewonnen und/oder genutzt.

### Beispiele

Für die in den nachstehenden Tabellen 1-3 dargestellten Beispiele wurde ein Schmelzzyklon der nachstehenden Bauart verwendet:

| | |
|---|---|
| Zyklon-Durchmesser | ca. 600 mm |
| Zyklon-Form | zylindrisch |
| Zyklon-Kühlung | Doppelmantel, Stadtwasser |
| Zyklon-Durchsatz | 500 - 1000 kg/h |
| Materialeinblasung | Horizontal/sekantial mit Luft/Sauerstoffgemisch |
| Luft/Sauerstoff-Mischung | direkte Zusammenführung volumetrisch gemessener Einzelströme (hieraus rechnerische Ermittlung der O₂-Anreicherung) |
| Luft/Sauerstoff-Vorwärmung | mittels sog. "Pebble-Heater" |

### Zur Bestimmung der Korngrößenverteilung wurde folgendermaßen vorgegangen:

Prüfsiebe der entsprechenden Maschenweite wurden beginnend mit einer Auffangschale für das Unterkorn des Siebes mit der engsten Maschenweite mit aufsteigender Maschenweite zu einem Turm in einer Labor-Siebmaschine aufeinandergestellt. 500 g Einsatzmaterial wurden auf das oberste Prüfsieb mit der größten Maschenweite aufgegeben und der gesamte Siebturm ca. 10 Minuten gerüttelt. Anschließend wurde die auf jedem Sieb verbleibende Menge sowie die Menge in der untersten Auffangschale gewogen. Diese Messung wurde auf Grund der Inhomogenität des Materials fünfmal durchgeführt. Aus den fünf Messreihen wurde abschließend mathematisch eine Durchschnittsverteilung errechnet.

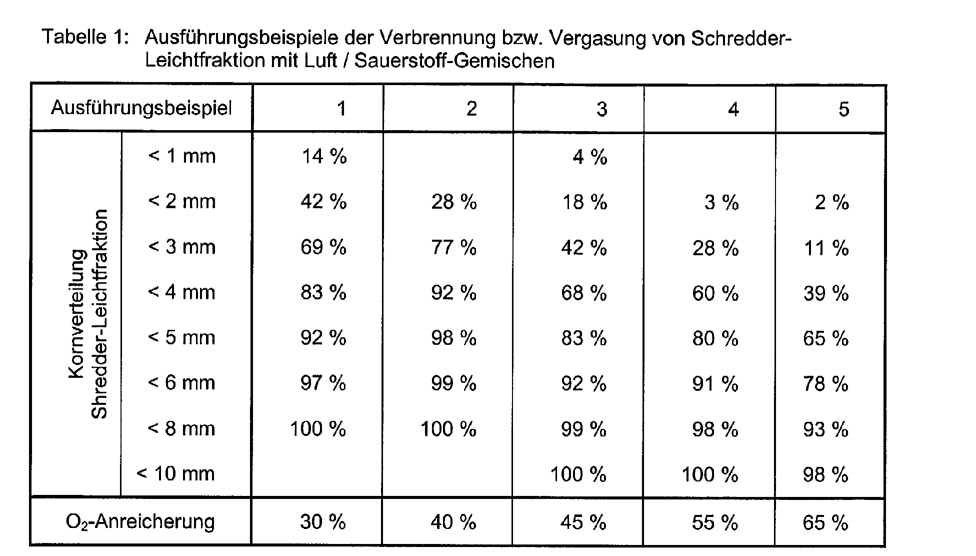

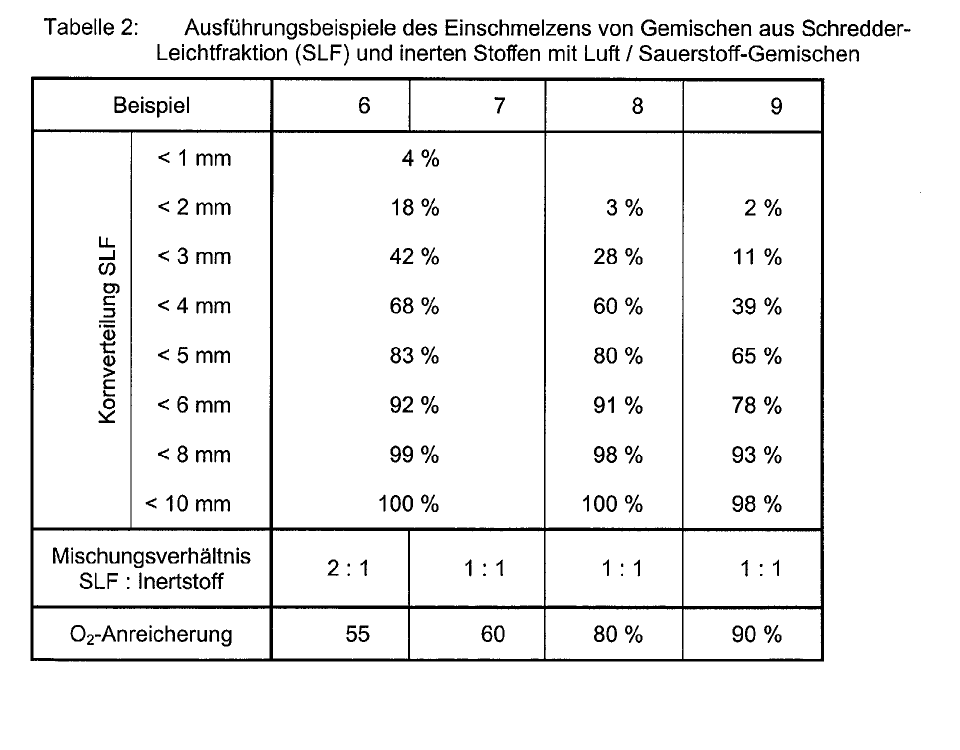

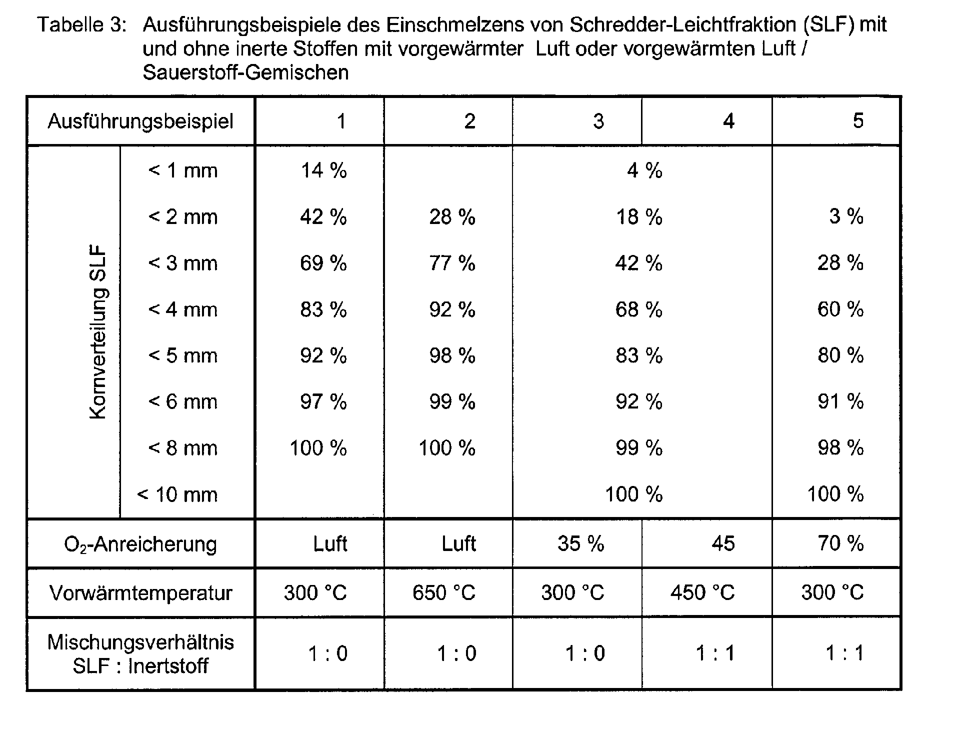

## Patentansprüche

1. Verfahren zur thermischen Verwertung von Schredder-Leichtfraktion mit einem Korngrößenanteil > 2 mm von zumindest 50 %, **dadurch gekennzeichnet, dass** Schredder-Leichtfraktion mit einem sauerstoffhältigen Gas, welches gegenüber Luft unter Standardbedingungen in seiner chemischen Reaktivität erhöht ist, in einem Schmelzzyklon zur Zündung gebracht und geschmolzen wird.

2. Verfahren gemäß Anspruch 1, **dadurch gekennzeichnet, dass** als in seiner chemischen Reaktivität erhöhtes sauerstoffhältiges Gas vorgewärmte Luft oder sauerstoffangereicherte Luft oder technischer Sauerstoff, welche gegebenenfalls vorgewärmt werden, verwendet werden.

3. Verfahren gemäß Anspruch 2, **dadurch gekennzeichnet, dass** das sauerstoffhältige Gas auf bis zu 800 °C, vorzugsweise auf bis zu 650 °C vorgewärmt wird.

4. Verfahren nach einem der Ansprüche 1 bis 3, **dadurch gekennzeichnet, dass** das sauerstoffhältige Gas mit einer Geschwindigkeit von 20 - 200 m/s in den Schmelzzyklon eingeblasen wird.

5. Verfahren nach einem der Ansprüche 1 bis 4, **dadurch gekennzeichnet, dass** das sauerstoffhältige Gas als Trägergas zum Einblasen der Schredder-Leichtfraktion in den Schmelzzyklon verwendet wird.

6. Verfahren nach einem der Ansprüche 1 bis 5, **dadurch gekennzeichnet, dass** sauerstoffhältiges Gas und Shredder-Leichtfraktion über mehrere - über den Umfang des Schmelzzyklons verteilte - Einblasstellen in den Schmelzzyklon eingeblasen werden.

7. Verfahren nach einem der Ansprüche 1 bis 6, **dadurch gekennzeichnet, dass** das in den Schmelzzyklon eingeblasene Gemisch aus sauerstoffhältigem Gas und Shredder-Leichtfraktion durch mindestens einen Zündbrenner gezündet wird.

8. Verfahren nach einem der Ansprüche 1 bis 7, **dadurch gekennzeichnet, dass** weitere Stoffe, insbesondere Schlackenbildner, weitere zu entsorgende Abfallstoffe, Klärschlämme, oder Stäube, beispielsweise Stäube aus Müllverbrennungsanlagen und/oder aus Industrieprozessen in den Schmelzzyklon eingeblasen werden.

9. Verfahren nach einem der Ansprüche 1 bis 7, **dadurch gekennzeichnet, dass** aus dem Schmelzzyklon austretende Schmelze und Abgase in einem dem Schmelzzyklon nachgeschalteten Trennaggregat voneinander getrennt werden.

10. Verfahren nach einem der Ansprüche 1 bis 9, **dadurch gekennzeichnet, dass** in dem Schmelzzyklon und/oder einem dem Schmelzzyklon nachgeschalteten Trennaggregat anfallende Prozesswärme an ein geeignetes Kühlmedium zur weiteren Verwendung übertragen wird.

11. Verfahren nach einem der Ansprüche 1 bis 10, **dadurch gekennzeichnet, dass** während des Verfahrens entstehendes Abgas unter Wärmerückgewinnung abgekühlt wird.

12. Verfahren nach einem der Ansprüche 10 oder 11, **dadurch gekennzeichnet, dass** aus dem Prozess rückgewonnene Wärme zur Vorwärmung von sauerstoffhältigem Gas verwendet wird.
